Europäisches Patentamt

European Patent Office

Office européen des brevets

(19)

(11) Publication number: **0 137 875**
**B1**

## EUROPEAN PATENT SPECIFICATION

(12)

(45) Date of publication of patent specification: 02.08.89

(51) Int. Cl.⁴: **A 01 N 25/12,** A 01 N 43/50 //
(A01N43/50, 43:50)

(21) Application number: 83306296.1

(22) Date of filing: 17.10.83

(54) Agglomerated halo-hydantoins.

(43) Date of publication of application:
24.04.85 Bulletin 85/17

(45) Publication of the grant of the patent:
02.08.89 Bulletin 89/31

(84) Designated Contracting States:
DE FR GB NL SE

(56) References cited:
US-A-3 346 446
US-A-3 412 021
US-A-4 297 224

(73) Proprietor: LONZA, INC.
22-10 Route 208
Fair Lawn New Jersey 07410 (US)

(72) Inventor: Girard, Theodore A.
1140-1/2 Market Street
Williamsport Pennsylvania 17701 (US)

(74) Representative: Arthur, Bryan Edward et al
Withers & Rogers 4 Dyer's Buildings Holborn
London EC1N 2JT (GB)

Courier Press, Leamington Spa, England.

## Description

For many years, halogenated hydantoins have been employed in aqueous systems for a variety of applications. To a large extent, the halogenated hydantoins have been utilzied for bleaching purposes as described, for example, in U.S.—A—4,078,099; 3,575,865; 3,481,878; 3,406,116 and 2,921,911.

Halogenated hydantoins have also been known to be effective for scouring, cleansing and disinfecting applications as illustrated by U.S.—A—2,789,078; 3,702,826 and 3,583,922.

Automatic dishwashing compositions of halogenated hydantoins are also well known as taught for example by U.S.—A—4,102,799.

The treatment of cooling tower waters, swimming pools and the like systems with halogenated hydantoins is illustrated in U.S.—A—4,297,224 and 3,412,021.

In many of these applications, it has been desirable to utilize the halogenated hydantoins in an agglomerated form as described in the aforementioned U.S.—A—3,341,021 so as to control the release of the halohydantoin.

Known methods of agglomerating halohydantoins generally involve conventional pelletizing or briquetting operations which may require use of binders or sticking agents. It has been proposed to use compacting rolls to fabricate the halohydantoins into various forms.

These current methods are severely hindered by the very dusty and corrosive nature of the halogenated hydantoins, which has contributed to high maintenance costs for equipment and unsatisfactory work environments. Furthermore, the halogenated hydantoins are susceptible to decomposition due to conditions of high humidity or excessive temperatures generated during processing in these procedures. Any acidic by-products of the decomposition could corrode metal surfaces, contaminate the produce, and catalyze further decomposition.

Agglomerating discs (often referred to as "disc pelletizers") have developed in the art of "balling" in an attempt to eliminate dusting problems. While agglomerating discs are employed for a variety of industrial applications, no means has been provided heretofore for using such equipment in the agglomeration of halohydantoins.

Thus, the article "pelletieren" by Biermann at pp. 321 to 326 of Vol. 2 of Ullmanns Encyklopadie der technischen Chemie (pub. 1972) discloses various methods of pelletising and in Figures 8 and 9 discloses a disc pelletiser in connection with pelletising iron ore.

US—A—3,346,446 teaches that the stability of hypoiodous acid, produced by oxidising iodide or iodine with dichlorodialkyl-hydantoin, is enhanced by adding unchlorinated hydantoin. This patent publication also discloses a solid composition adapted to be dissolved in water to form a germicidal solution of hypoiodous acid which comprises 1,3 - dichlor - 5,5 - dimethyl - hydantoin, 5,5 - dimethyl - hydantoin, potassium iodide and sodium bicarbonate, the minimum ratio of 5,5 - dimethyl - hydantoin to 1,3 - dichloro - 5,5 - dimethylhydantoin being 1:20.

It is a primary object of the present invention to provide a method for agglomerating halogenated hydantoins into a spherical form having a hard-structural integrity.

A further object of the present invention in another aspect is to provide spherical agglomerates of halogenated hydantoins which, when placed in water, retain their shape and integrity for periods of time sufficient to provide a uniform and controlled release of the active halogen.

Still a further object of the present invention is to provide an improved means for the disinfecting of recirculating aqueous systems through the controlled release of active halogen.

In one aspect the invention provides a method of forming agglomerates of a dihalogenated hydantoin comprising mixing dimethylhydantoin, in a proportion of at least 5% by weight relative to the total amount of hydantoins, with said dihalogenated hydantoin, characterised in that said hydantoins are fed to the surface of a rotating agglomerating disc, water is sprayed concurrently onto the hydantoin material on the disc at a rate such as to form spherical agglomerates having a water content of 30% or less, and the resulting spherical agglomerates are subsequently dried.

In another aspect the invention provides a spherical agglomerate of a dihalogenated hydantoin and dimethylhydantoin having structural integrity and obtainable by the above method.

Such an agglomerate may be used for the disinfection of a recirculating aqueous system through the controlled release of active halogen.

Preferred features of the invention are defined in the dependent claims.

The halogen release properties of such agglomerate are improved in comparison with the agglomerate of US—A—3,412,021.

In the method of the invention, halogenated hydantoin and DMH may be conveniently fed to the disc surface in a variety of forms and separately or in combination. It is preferred, however, to form a dry pre-mix of the DMH and halogenated hydantoin which is fed to the disc surface and sprayed concurrently on the surface with water to the desired level. Alternatively, one may feed the hydantoin materials, singly or in combination, in an aqueous or moist state. Thus, one may dissolve DMH in the water which is sprayed upon the disc surface, since DMH is soluble to some extent in water. One may increase the temperature of the water in order to achieve the desired level of DMH solubility. Also, as the halogenated hydantoins when prepared are generally precipitated in an aqueous solution, one can feed the material in such a moistened state directly to the disc.

Agglomerating discs which may be used in accordance with the present invention are well-known in the art and are readily available from various manufacturers. These discs are characterised by a flat surface having baffles positioned above surface and a rim circumscribing the edge thereof. The disc rotates at an appropriate angle to the horizontal. Generally an angle of from about 40° to 60° is employed and preferably about 45°, but such is not critical.

The art of "balling" or agglomerating is known as is the equipment required as noted in "The Theory and Practice of Disc Balling" by S. B. Floyd, Jr. and W. H. Engelleitner, IBA Proceedings, Vol. 10, pp. 51—58 (1967) and "Disc Pelletizing Theory and Practice" by Carl A. Holley, Ferro-Tech Form 149, pp. 1—8 (Copyright 1979). There are a number of factors which influence formation of the agglomerates to produce a wide range of product sizings from the disc from the feed. The angle of the disc to the horizontal, speed of the disc, point of feed application and location of the water spray(s) each influence the sizing, but the primary factors are the feed position and location of the water sprays. Thus, for a relatively small (i.e. about 4.8 mm (3/16 inch) diameter) pellet the feed may be placed at approximately the 3 o'clock position on the disc with a water source above and in line with the feed point. Initial pellet growth takes place in the outer stream of the disc. Larger products result from a change in position of the feed progressively from the right to left-hand side (discharge side) of the disc with a primary water source above the feed point, e.g. at 10 or 11 o'clock on the disc. The baffles positioned above the disc surface affect the stream flow of particles and resulting agglomerates. As for the disc speed, this may vary widely with most discs having pre-set speeds. Generally, from 3 to 60 rpm may be used, and preferably 10 to 25 rpm, but this is not critical.

There are a number of halogenated hydantoins which may be used, but preferably the active material is selected from the group consisting of N,N' - dichloro - 5,5 - dimethylhydantoin, N - bromo - N' - chloro - 5,5 - dimethylhydantoin and N,N' - dibromo - 5,5 - dimethylhydantoin, with the N - bromo - N - chloro - 5,5 - dimethylhydantoin being most preferred.

A surprising feature of the present invention is the enhanced structural integrity which the addition of dimethylhydantoin to the halogenated hydantoin provides to the resulting spherical agglomerate. In the absence of the 5,5 - dimethylhydantoin (DMH) the halogenated hydantoin when fed to the disc with water results in a friable agglomerate having no substantial integrity and which readily crumbles when pressed. However, with the addition of DMH one obtains a relatively hard spherical agglomerate having excellent structural integrity (i.e. it does not dust or flake, and maintains its shape when dropped or mechanically mixed with other materials).

The spherical agglomerates of the present invention may be formed in a wide range of diameters depending upon the feed rate of hydantoins to the disc, speed of the disc and angle of the disc and other factors noted above. These parameters are all within the capability of one familiar with the operation of agglomerating discs and are not critical to the invention claimed herein.

Generally, agglomerates ranging from about 4.8 mm (3/16 inch) to about 25.4 mm (one inch) (and preferably about 19 mm (0.75 inch)) are suitable. It will be appreciated that the size of agglomerates formed will depend upon the use desired. Thus, smaller agglomerates may be more well suited to bleach and scouring compositions, whereas larger agglomerates may be best for use in swimming pools and spas.

The amount of DMH and dihalogenated hydantoin which are fed to the disc may vary considerably. However, generally from 70 to 95 parts by weight (preferably 90 parts) of the dihalogenated dimethylhydantoin is mixed with from 5 to 30 parts by weight (preferably 10 parts) of the DMH. These materials preferably are pre-mixed in granular or powder form and then fed to the rotating disc and sprayed with a sufficient amount of water to provide a moisture content of 30% or less (preferably from about 15 to 25%, and most suitably about 20%).

The following examples are offered to more fully illustrate the present invention, but are not to be construed as limiting the scope thereof.

Example 1

Ninety parts by weight of powdered N - bromo - N' - chloro - 5,5 - dimethylhydantoin (BCDMH) were mixed with ten parts by weight of DMH and fed to an agglomerating disc (Sprout Waldron—1 metre (39 inch) diameter Model 1000) at a nominal feed rate of 181 kg/hr. (400 lbs/hr). The speed setting of the disc was 3 (10 to 15 rpm) and the feed angle 45°. The feed mixture was sprayed with water which was introduced at the rate of 45.5 kg/hr. (100 lbs/hr). The resulting spherical agglomerates were approximately 12.7 mm (0.5 inch) in diameter and were dried in a convection drier at 65°C.

These agglomerates were hard and maintained their shape when handled with no dusting or flaking. When placed in water, the agglomerates provided a uniform and steady release of active halogen.

Example 2

A series of agglomerates using a variety of feeds were prepared using a Sprout-Waldron 0.41 m (16-inch) agglomerating disc at an angle of 45°C and constant speed. The moisture content and properties of the resulting agglomerated balls are set forth in Table 1 below.

# EP 0 137 875 B1

## TABLE 1

| Feed material | % Moisture | Physical properties |
|---|---|---|
| BCDMH | 27.0 | Crumbled and dusty—no integrity |
| BCDMH | 28.3 | " |
| BCDMH | 23.4 | " |
| BCDMH | 25.0 | " |
| BCDMH | 26.1 | " |
| BCDMH | 25.6 | " |
| BCDMH | 25.4 | " |
| BCDMH | ·25.4 | " |
| BCDMH+2.9% DMH | 25.8 | Friable and crumbly |
| BCDMH+1.4% DMH | 25.9 | " |
| BCDMH+10% DMH | 25.5 | Hard pellet with structural integrity |
| BCDMH+10% DMH | 25.1 | " |
| BCDMH+5% DMH | | Pellet with dusting and slight integrity |

Example 3

The effect of adding DMH to BCDMH on the quality of an agglomerated pellet was investigated by both dry blending DMH with the BCDMH feed as well as adding the DMH together with the water spray using the agglomerating disc of Example 2. The disc speed was set at 2, at an angle of 45° with a nominal feed rate of 20.4 kg/hr (45 lb/hr) BCDMH and a nominal water rate of 5.67 kg/hr (12.5 lb/hr). The resulting particles were then tested for crushing strength and product abrasion loss according to the following procedures and the results are set forth in Table 2 below.

Crush test
Nonselective (grab sample)

1. A small grab sample of 30 particles or so is placed on the pan of a top loading balance (Sartorius, Type 2251).

2. Five samples, selected at random, are crushed on the pan with the head of an 11.1 mm (7/16 in) stove bolt.

3. The weight in grams indicated on the balance immediately before the particle is crushed is recorded as the crushing strength of that particle.

4. The average of the five particles, expressed in grams, is referred to as the crushing strength of the sample.

Selective (screened sample)

1. A sample of sufficient volume is screened through a series of sieves in order to obtain ten or more particles of a desired mesh size.

2. Steps 2 through 4 above are repeated.

Abrasion test

1. A representative sample of 30 grams is screened by hand through a series of sieves of decreasing mesh size (i.e., 8, 10, 12, 14, 20, 35, 48, 100, 200).

2. Each portion that is collected on the various sieves is carefully weighed and expressed as a percentage of the total sample sieved.

3. The largest percentage collected on the various sieves determines the "largest sieve fraction". The range of sieves on which portions were collected, in addition to the largest sieve fraction, is used to characterize the particle size distribution of sample.

4

4. 10 grams of the largest sieve fraction is placed on the next smaller sieve and screened for 5 minutes using an automatic shaker (Fritch, Analysette) set on the highest amplitude (10).

5. The fraction that passes through the sieve is carefully weighed, expressed as percent, and recorded as "abrasion loss".

TABLE 2
Effect of added DMH on BCDMH quality

Disc speed:      2.0 set
Disc angle:      50°
Nominal feed rate:      20.4 kg/hr (45 lb/hr) dry BCDMH
Nominal water rate:      5.67 kg/hr (12.5 lb/hr)

| Run No. | DMH added via | Calculated wt. % DMH in dry BCDMH product | Crushing strength grams[1] | Product abrasion loss[2] |
|---------|---------------|------------------------------------------|---------------------------|--------------------------|
| 1 | — | 0 | 38 | 36.3 |
| 2 | Water spray | 1.4 | 42 | 19.3 |
| 3 | Water spray | 2.9 | 45 | 14.8 |
| 4 | Dry blend | 5 | 74 | 15.3 |
| 5 | Dry blend | 10 | 101 | 1.9 |

[1] Hardness run on 14—20 mesh product fraction.
[2] Fritch-analysette Automatic Sieve Shaker—Koppers procedure.

Example 4

Tests were conducted to compare the release of halogen using agglomerates (about 12.7 mm (0.5 inch) diameter) of Example 1 with commercially available stick agglomerates (25.4 mm×76.2 mm) (1″×3″) of BCDMH such as described in U.S.—A—3,412,021. In these tests, 88 grams of each of the agglomerates were placed in a glass vessel with glass wool positioned above and below the agglomerates. The glass vessels were fitted with an overflow tube for collecting the samples at various time intervals. Tap water having a pH of 8.1 was introduced through the top of the vessel via a glass tube which extended to the bottom of the vessel and fed at a rate of 18 g/minute. The total and free halogen was measured and is expressed as active Cl+ in ppm in Table 3 below.

5

# EP 0 137 875 B1

## TABLE 3
### Active halogen expressed as Cl+ in ppm

| Elapsed time (hrs) | Unit #1 example total | One free | Unit #2 commercial sticks total free | Free |
|---|---|---|---|---|
| 1 | | | | |
| 2 | 237 | — | 103 | — |
| 3 | 259 | — | 75 | — |
| 5 | — | 73 | — | 15 |
| 10 | 177 | 85 | 54 | 17 |
| 17 | | | | |
| 22 | 138 | 70 | 28 | 13 |
| 30 | 133 | 56 | 25 | 8 |
| 64 | 94 | 44 | 16 | 6 |
| 71 | 90 | 44 | 16 | 5 |
| 88 | 73 | 38 | 16 | 7 |

From the foregoing examples, it will be appreciated that the agglomerates of the present invention provide for an improved means whereby one may disinfect recirculating aqueous systems such as cooling towers, air conditioners, swimming pools, spas and similar type environments. Treatment of such systems by contacting the water contained therein with a biocidally effective amount of the agglomerate results in a controlled release of active halogen to rid and/or keep the system free from undesirable microbial infestation. Generally from 1 to 2 ppm or greater of active halogen in the system is sufficient to disinfect and maintain the system free of infestation.

The invention having been thus described, it will be appreciated that various modifications may be made thereto without departing from the scope of the claims which follow. Furthermore, the materials and procedures of the present invention may comprise, consist or consist essentially of the hereinabove recited materials and procedures.

**Claims**

1. A method of forming agglomerates of a dihalogenated hydantoin comprising mixing dimethylhydantoin, in a proportion of at least 5% by weight relative to the total amount of hydantoins, with said dihalogenated hydantoin, characterised in that said hydantoins are fed to the surface of a rotating agglomerating disc, water is sprayed concurrently onto the hydantoin material on the disc at a rate such as to form spherical agglomerates having a water content of 30% or less, and the resulting spherical agglomerates are subsequently dried.

2. A process as claimed in claim 1, wherein said dihalodimethyl-hydantoin is selected from N,N - dichloro - 5,5 - dimethylhydantoin, N - bromo - N' - chloro - 5,5 - dimethylhydantoin and N,N' - dibromo - 5,5 - dimethylhydantoin.

3. A process as claimed in claim 2, wherein said dihalodimethylhydantoin is N - bromo - N' - chloro - 5,5 - dimethylhydantoin.

4. A process as claimed in claim 1, 2 or 3 wherein the mixture contains 70 to 95 parts by weight of dihalodimethylhydantoin and 5 to 30 parts by weight of 5,5-dimethylhydantoin.

5. A process as claimed in claim 4 wherein the amount of water added to the spherical agglomerate ranges from 15 to 25% by weight.

6. A process as claimed in any preceding claim wherein the mixture contains 90 parts by weight of N - bromo - N - chloro - 5,5 - dimethylhydantoin, and 10 parts by weight of 5,5-dimethylhydantoin.

7. A process as claimed in any preceding claim wherein the 5,5-dimethyl-hydantoin fed to the surface of the disc is dissolved in the spray of water.

6

8. A spherical agglomerate of a dihalogenated hydantoin and dimethylhydantoin having structural integrity and obtainable by a method as claimed in any preceding claim.

9. An agglomerate as claimed in claim 8 wherein the diameter of the spherical agglomerate is from about 4.8 mm (3/16 inch) to about 25.4 mm (one inch).

10. An agglomerate as claimed in claim 9 wherein the diameter of the spherical agglomerate is about 19 mm (0.75 inch).

11. A method for the disinfection of a recirculating aqueous system through the controlled release of active halogen which comprises contacting water contained in said system with a biocidally effective amount of an agglomerate of dimethylhydantoin and a dihalogenated hydantoin, the proportion of the dimethylhydantoin being at least 5% by weight of the total of said hydantoins, characterised in that said agglomerate is a spherical agglomerate as claimed in any of claims 8, 9 and 10.

12. The method of claim 11 wherein the amount of agglomerate is sufficient to provide at least 1 part per million of active halogen in said system.

13. The method of claim 12 wherein said system is a cooling tower, air conditioner, swimming pool or spa.

## Patentansprüche

1. Verfahren zur Bildung von Agglomeraten eines dihalogenierten Hydantoins, bei dem Dimethylhydantoin in einer Menge von mindestens 5 Gew.%, bezogen auf die Gesamtmenge von Hydantoinen, mit dem dihalogenierten Hydantoin gemischt wird, dadurch gekennzeichnet, daß die Hydantoine auf die Oberfläche einer rotierenden Agglomerierungsscheibe gespeist werden, gleichzeitig Wasser mit einer solchen Rate auf das Hydantoin-Material auf der Scheibe gesprüht wird, daß kugelförmige Agglomerate mit einem Wassergehalt von 30% oder weniger gebildet werden, und die gebildeten kugelförmigen Agglomerate anschließend getrocknet werden.

2. Verfahren nach Anspruch 1, bei dem das Dihalogendimethylhydantoin aus N,N - Dichlor - 5,5 - Dimethylhydantoin, N - Brom - N' - chlor - 5,5 - dimethylhydantoin und N,N' - Dibrom - 5,5 - dimethylhydantoin ausgewählt ist.

3. Verfahren nach Anspruch 2, bei dem das Dihalogendimethylhydantoin N - Brom - N' - chlor - 5,5 - dimethylhydantoin ist.

4. Verfahren nach Anspruch 1, 2 oder 3, bei dem die Mischung 70 bis 95 Gewichtsteile Dihalogendimethylhydantoin und 5 bis 30 Gewichtsteile 5,5 - Dimethylhydantoin enthält.

5. Verfahren nach Anspruch 4, bei dem die dem kugelförmigen Agglomerate zugegebene Wassermenge 15 bis 25 Gew.% beträgt.

6. Verfahren nach einem der vorangehenden Ansprüche, bie dem die Mischung 90 Gewichtsteile N - Brom - N - chlor - 5,5 - dimethylhydantoin und 10 Gewichtsteile 5,5 - Dimethylhydantoin enthält.

7. Verfahren nach einem der vorangehenden Ansprüche, bei dem das auf die Oberfläche der Scheibe gesprühte 5,5 - Dimethylhydantoin in dem Sprühwasser gelöst ist.

8. Kugelförmiges Agglomerat aus einem dihalogenierten Hydantoin und Dimethylhydantoin mit stabilem Gefüge und erhältlich durch das Verfahren nach einem der vorangehenden Ansprüche.

9. Agglomerat nach Anspruch 8, bei dem der Durchmesser des kugelförmigen Agglomerats etwa 4,8 mm (3/16 inch) bis etwa 25,4 mm (1 inch) beträgt.

10. Agglomerat nach Anspruch 9, bei dem der Durchmesser des kugelförmigen Agglomerats etwa 19 mm (0,75 inch) beträgt.

11. Verfahren zur Desinfektion eines zirkulierenden wäßrigen Systems durch die regulierte Freisetzung von aktivem Halogen, bei dem in dem System enthaltenes Wasser mit einer biozid wirkenden Menge eines Agglomerates aus Dimethylhydantoin und einem dihalogenierten Hydantoin kontaktiert wird, wobei der Anteil des Dimethylhydantoins mindestens 5 Gew.% der Gesamtmenge der Hydantoine beträgt, dadurch gekennzeichnet, daß das Agglomerat ein kugelförmiges Agglomerat nach einem der Ansprüche 8, 9 und 10 ist.

12. Verfahren nach Anspruch 11, bei dem die Agglomeratmenge ausreichend ist, um mindestens 1 ppm aktives Halogen in dem System zur Verfügung zu stellen.

13. Verfahren nach Anspruch 12, bei dem das System ein Kühlturm, eine Klimaanlage, ein Swimming-Pool oder ein Schwimmbad ist.

## Revendications

1. Procédé de formation d'agglomérats d'une hydantoïne dihalogénée, comprenant le mélange de diméthyl-hydantoïne, en proportion d'au moins 5% en poids par rapport à la quantité totale des hydantoïnes, avec l'hydantoïne dihalogénée, caractérisé en ce que les hydantoïnes sont placées à la surface d'un disque rotatif d'agglomération, de l'eau est pulvérisée en même temps sur le matériau contenant les hydantoïnes placées sur le disque, avec un débit tel que des agglomérats sphériques se forment avec une teneur en eau inférieure ou égale à 30%, et les agglomérats sphériques résultants sont ensuite séchés.

2. Procédé selon la revendication 1, dans lequel la dihalodiméthyl-hydantoïne est choisie parmi la N,N - dichloro - 5,5 - diméthyl - hydantoïne, la N - bromo - N' - chloro - 5,5 - diméthyl - hydantoïne et la N,N' - dibromo - 5,5 - diméthyl - hydantoïne.

3. Procédé selon la revendication 2, dans lequel la dihalodiméthyl-hydantoïne est la N - bromo - N' - chloro - 5,5 - diméthyl - hydantoïne.

4. Procédé selon la revendication 1, 2 ou 3, dans lequel le mélange contient 70 à 95 parties en poids de dihalodiméthyl-hydantoïne et 5 à 30 parties en poids de 5,5-diméthyl-hydantoïne.

5. Procédé selon la revendication 4, dans lequel la quantité d'eau ajoutée aux agglomérats sphériques est comprise entre 15 et 25% en poids.

6. Procédé selon l'une quelconque des revendications précédentes, dans lequel le mélange contient 90 parties en poids de N - bromo - N - chloro - 5,5 - diméthyl - hydantoïne et 10 parties en poids de 5,5 - diméthyl - hydantoïne.

7. Procédé selon l'une quelconque des revendications précédentes, dans lequel la 5,5-diméthyl-hydantoïne transmise à la surface du disque est dissoute dans la pulvérisation d'eau.

8. Agglomérat sphérique d'une hydantoïne dihalogénée et de diméthyl-hydantoïne, ayant une grande solidité et obtenu par un procédé selon l'une quelconque des revendications précédentes.

9. Agglomérat selon la revendication 8, tel que le diamètre de l'agglomérat sphérique est compris entre environ 4,8 mm (3/16 pouce) et environ 25,4 mm (1 pouce).

10. Agglomérat selon la revendication 9, tel que le diamètre de l'agglomérat sphérique est d'environ 19 mm (0,75 pouce).

11. Procédé de désinfection d'une installation à recirculation aqueuse par dégagement réglé d'halogène actif, qui comprend la mise en contact d'eau contenue dans l'installation avec une quantité d'un agglomérat de diméthyl-hydantoïne et d'une hydantoïne dihalogénée suffisante pour qu'elle ait une action biocide efficace, la proportion du diméthyl-hydantoïne étant d'au moins 5% du poids total des hydantoïnes, caractérisé en ce que l'agglomérat est un agglomérat sphérique selon l'une quelconque des revendications 8, 9 et 10.

12. Procédé selon la revendication 11, dans lequel la quantité d'agglomérat est suffisante pour qu'il donne une partie par million d'halogène actif dans l'installation.

13. Procédé selon la revendication 12, dans lequel l'installation est une tour de refroidissement, un appareil de conditionnement d'air, une piscine ou une source minérale.